# EUROPEAN PATENT SPECIFICATION

(11) **EP 2 949 728 B1**
(45) Date of publication and mention of the grant of the patent: **21.08.2019**
(21) Application number: 15151939.4
(22) Date of filing: 21.01.2015
(51) Int. Cl.: C10G 9/18, C10G 9/20, F23C 5/08, F28D 7/06, B01J 8/06

(54) **METHOD OF OPERATION OF AN ETHYLENE CRACKING FURNACE**
VERFAHREN FÜR DEN BETRIEB EINES ETHYLENSPALTOFENS
PROCÉDÉ D'OPÉRATION D'UN FOUR DE CRAQUAGE D'ÉTHYLÈNE

(30) Priority: 28.05.2014 CN 201410228915
(43) Date of publication of application: 02.12.2015
(73) Proprietor: Wison Engineering Ltd., Shanghai 201210 (CN)
(72) Inventor: ZHANG, Lei, 100102 Beijing (CN); LI, Baoyou, 100102 Beijing (CN); TU, Guohua, 100102 Beijing (CN); BO, Jianmin, 100102 Beijing (CN); LU, Yongsheng, 100102 Beijing (CN)
(74) Representative: Held, Stephan

(56) References cited:
- WO-A1-2006/090482
- WO-A1-2009/014949
- CN-A- 101 333 147
- CN-A- 102 660 316
- FR-A5- 2 133 306
- US-A- 4 454 839
- US-B2- 7 718 052
- Anonymous: "Electric fixed-focus portable pyrometer", Popular Mechanics, November 1910 edition, 1 November 1910 (1910-11-01), page 614, XP055444751, Retrieved from the Internet: URL:https://books.google.nl/books?id=-N0DA AAAMBAJ&pg=PA614&lpg=PA614&dq=peep+door+me asuring+temperature&source=bl&ots=ILDLeR0g TI&sig=APcuo0bwnQxnplsYFo8nWBB5pbk&hl=en&s a=X&ved=0ahUKEwjWru3LsfPYAhXGYVAKHTGwBocQ6 AEINzAF#v=onepage&q=peep%20door%20measurin g%20temperature&f=false [retrieved on 2018-01-25]

## Description

### Technical Field of the Invention

The present invention relates to a procedure for operating an ethylene cracking furnace, in particular an ethylene cracking furnace for thermally cracking hydrocarbons and petroleum distillates so as to produce olefins, such as ethylene, propylene, etc., and belongs to the field of a hydrocarbon oil cracking apparatus.

### Background of the Invention

Since the 60s of the last century, since the successful development of vertically hanging radiant coil cracking furnaces, ethylene cracking technologies have scored considerable achievements. At present, respective ethylene cracking furnace licensors lay research emphases on aspects of achieving large capacity cracking furnaces, improving selectivity of cracking furnaces, improving product yield, improving a cracking furnace's run-length, improving operation safety of cracking furnaces, reducing operating energy consumption and reducing capital cost for cracking furnaces, etc.

To improve production capacity of a single cracking furnace and decrease the capital cost for a cracking furnace, it is required to arrange more radiant tubes within limited firebox space. Difference licensors propose different furnace tube configuration patterns and their arrangement manners in fireboxes.

In patent CN101333147A, an ethylene cracking furnace structure and furnace radiant coils aligned in two rows are described. Two-pass radiant coils include one inlet tube and one outlet tube, wherein the inlet tube and the outlet tube are connected by means a U-shaped bend tube. A plurality of groups of radiant coils is arranged in two rows at the center of the firebox, the inlet tubes and the outlet tubes in each row of the two rows of radiant tubes are arranged to be staggered. Cracking furnaces with this kind of arrangement of radiant coils, as compared with cracking furnaces having the same firebox and adopting the arrangement of a single row, have improved production capacity and run-length under the same operation conditions. Meanwhile, radiant coils of this kind and with this arrangement manner have better thermal stress status.

Patent WO 2005/075607 A1 describes a furnace coil arrangement manner in which radiant coils are arranged in three rows between two rows of burners at the bottom of the firebox, wherein outlet tubes of each group of radiant coils are concentrated on the central line of the firebox, and inlet tubes are distributed on two sides of the firebox central line. As compared with the arrangement manner of the furnace coils arranged in two rows, this arrangement manner of the radiant coils can make more coils be arranged in the same firebox. Thus, its capacity can be further improved. According to description of this patent, due to the outlet tube row (high TMT- Tube Metal Temperature tube row) in the middle row being shaded by inlet tube rows (low TMT-Tube Metal Temperature tube row) on the two sides, under the same operation conditions, the highest tube wall metal temperature (TMT-Tube Metal Temperature) of the outlet tube row will be decreased, thereby prolonging the run-length of the cracking furnace. However, such an arrangement manner that the radiant coils are arranged in three rows has certain problems. It is known by a personnel engaged in working of cracking furnace technology that, in production operation, due to the tube wall metal temperature of the radiant coils' outlet tube being higher than that of the inlet tube, generally, the tube wall metal temperature of the outlet tube is regarded as a criteria for determining stopping the cracking furnace for steam-air burning decoking procedure. Thus, measurement of the tube wall metal temperature of the radiant coils' outlet tube is critical. The outlet tube row in the radiant coil arrangement described in this patent is located between two inlet tube rows. Due to being occluded by the two inlet tube rows on the outer sides, measurement of the tube wall metal temperature cannot be carried out for each outlet tube directly through peep doors on the furnace wall, or the measurement cannot be performed precisely.

Patent WO 98/56872 (US 2002/0159934 A1) describes an arrangement manner of two-pass U-shaped furnace radiant coils. One firebox is provided with two rows of radiant coils in total. Different from arrangements of the above-mentioned furnaces arranged in two rows and in three rows, the firebox mentioned in this patent is provided with four rows of bottom burners in total, wherein each two rows of burners correspond to one row of radiant tubes, each row of the two radiant tube rows is located in the middle of the two rows of burners, and inlet and outlet tubes of each group of radiant coil are located in the same tube row. Such an arrangement can make all the radiant tubes obtain symmetrical double-sided radiation, and there is no such a problem that it is difficult to measure the tube wall metal temperature of the outlet tubes. However, the volume of the firebox and the number of the bottom burners are approximately doubled, such that the furnace space taken up and the investment will increase accordingly. Patent EP 0519230 A1 and patent WO 03/087268A2 disclose an arrangement manner of radiant coils in four (4) rows, wherein each group of radiant coil has two passes, the inlet tube pass is a plurality of parallel slim tubes, the outlet tube pass is one tube having a larger diameter. Each two rows of burners correspond to one row of radiant tubes. Thus, there are eight rows of bottom burners in the firebox in total, each row of four rows of radiant tubes is located in the middle of two rows of burners, and inlet and outlet tubes of each group of furnace coil are located in the same tube row. Such an arrangement can make all the radiant tubes obtain symmetrical double-sided radiation, but the volume of the firebox and the number of the bottom burners increase approximately by four times, such that the furnace space taken up and the investment will increase, and it is impossible to measure the outlet tubes' tube wall metal temperature of the two rows on the inner sides (the two rows adjacent the central line of the firebox) directly through peep doors on the furnace wall.

FR 2 133 305 A5 discloses a cracking furnace comprising a radiant section, a convection section and heat exchangers (TLE) comprising a plurality of burners placed in rows. In between each two burners rows comprising a group of radiant coils, whereby said radiant coils also placed in two rows of tubes.

US 7 718 052 B2 and WO 2009/014949 A1 disclose another furnaces comprising a plurality of burners in rows.

### Summary of the Invention

The invention is a process as defined in claim 1. The present invention relates to a procedure for operating an ethylene cracking furnace mainly comprising: a radiant section (1), a convection segment (2), TLEs (Transfer Line Exchangers) (8), wherein said radiation section (1) is provided with at least one firebox (3), a plurality of burners (9) are arranged at the bottom of said firebox (3), said plurality of burners (9) is arranged to comprises a first row of burners, a second row of burners, a third row of burners and a fourth row of burners, these rows of burners are arranged to be parallel with each other and aligned in sequence; a first group of radiant coils and a second group of radiant coils are provided inside said firebox (3), wherein said first group of radiant coils is arranged between said first row of burners and said second row of burners, said second group of radiant coils is arranged between said third row of burners and said fourth row of burners; each of said first group of radiant coils and said second group of radiant coils is arranged in two rows, such that said firebox (3) is provided with four rows of radiant tubes in total.

When the following description of specific embodiments of the present invention is read with reference to enclosed figures, details of respective embodiments of the present invention and their beneficial effect will be understood more clearly.

### Description of the Drawings

Figs. 1A and 1B are three-dimensional schematic views of the present invention's cracking furnaces, wherein for the sake of clarity, only one group of said first group of radiant coils and said second group of radiant coils is shown, and the other group is omitted, wherein, Fig. 1A is the situation that the cracking furnace comprises only one firebox located beneath said convection section; Fig. 1B is the situation that the cracking furnace comprises two fireboxes respectively arranged on two sides below the convection section.
Figs. 2A and 2B are top schematic views of the present invention's cracking furnace in which 1-1 type radiant coil arrangement is applied;

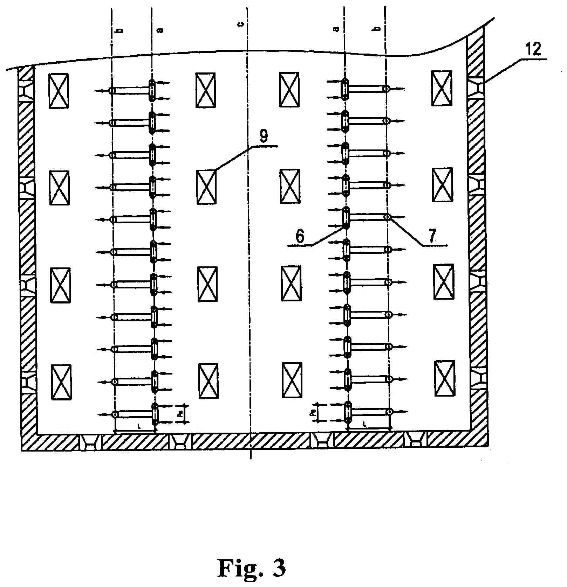

Fig. 3 is a top schematic view of the present invention's cracking furnace in which 2-1 type radiant coil arrangement is applied;

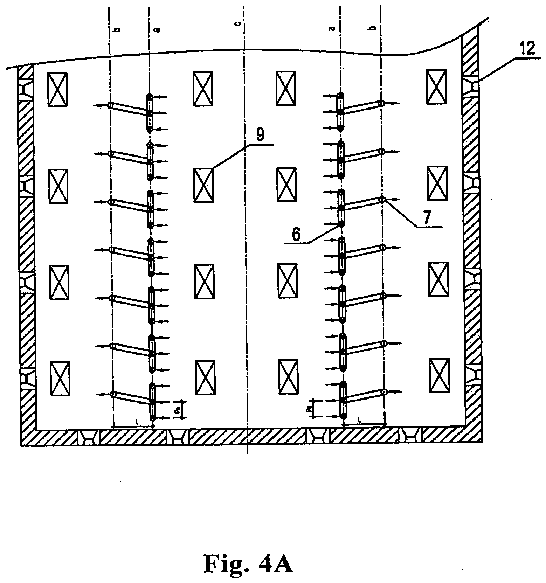

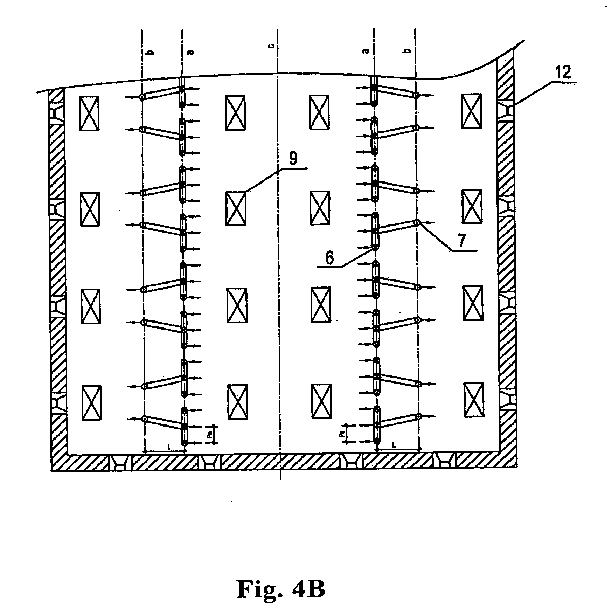

Figs. 4A and 4B are top schematic views of the present invention's cracking furnace in which 3-1 type radiant coil arrangement is applied;

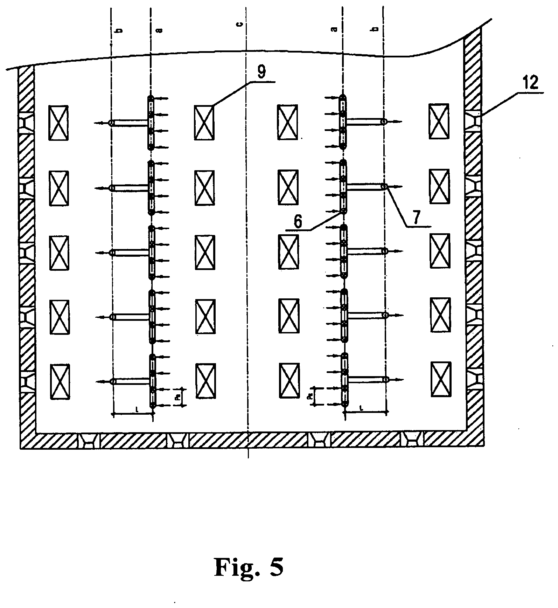

Fig. 5 is a top schematic view of the present invention's cracking furnace in which 4-1 type radiant coil arrangement is applied;
Figs 6A and 6B are top schematic views of the present invention's cracking furnace in which 1-1-1-1 type radiant coil arrangement is applied;
Fig. 7 is a top schematic view of the present invention's cracking furnace in which 2-2-1-1 type radiant coil arrangement is applied.

### Explanation of Reference Signs

Radiant section (1); Convection section (2); Firebox (3); Manifold (4);
Distribution tube (5); Inlet tube (6); Outlet tube (7); TLEs (Transfer Line Exchangers) (8); Bottom burner (9); Bend tube and other tube fittings (10); Convection coil (11); Peep door (12).

### Detailed Description

The present invention provides a procedure for an ethylene cracking furnace as defined in claim 1 and 2. mainly comprising: a radiant section (1), a convection segment (2), TLEs (Transfer Line Exchangers) (8), wherein said radiation section (1) is provided with at least one firebox (3), a plurality of burners (9) are arranged at the bottom of said firebox (3), said plurality of burners (9) is arranged to comprises a first row of burners, a second row of burners, a third row of burners and a fourth row of burners, these rows of burners are arranged to be parallel with each other and aligned in sequence; a first group of radiant coils and a second group of radiant coils are provided inside said firebox (3), wherein said first group of radiant coils is arranged between said first row of burners and said second row of burners, said second group of radiant coils is arranged between said third row of burners and said fourth row of burners; each of said first group of radiant coils and said second group of radiant coils is arranged in two rows, such that said firebox (3) is provided with four rows of radiant tubes in total.

Hydrocarbons and petroleum distillates, after preheated by convection coils (11), enter manifold (4), then flow-distributed by distribution tubes (5), and then enter radiant coils so as to be cracked, and then the cracked gas is cooled rapidly through TLEs (Transfer Line Exchangers) (8) and enters the downstream procedures.

Furnace tube planes (a), in which said first group of radiant coils and said second group of radiant coils' inlet pass tube are located, keep far away from said firebox (3)'s side wall and adjoin said firebox (3)'s central line (c); furnace tube planes (b), in which said first group of radiant coils and said second group of radiant coils' outlet pass tube are located, keep far away from said firebox (3)'s central line (c) and adjoin said firebox (3)'s side wall. Said firebox (3)'s side wall is provided with a plurality of peep doors (12), such that all the outlet pass tube's tube wall metal temperature can be measured directly through said peep doors (12).

In some embodiments of the present invention, a distance L between said first group of radiant coils and said second group of radiant coils' inlet pass tube plane (a) and outlet pass tube plane (b) is 300-1000 mm.

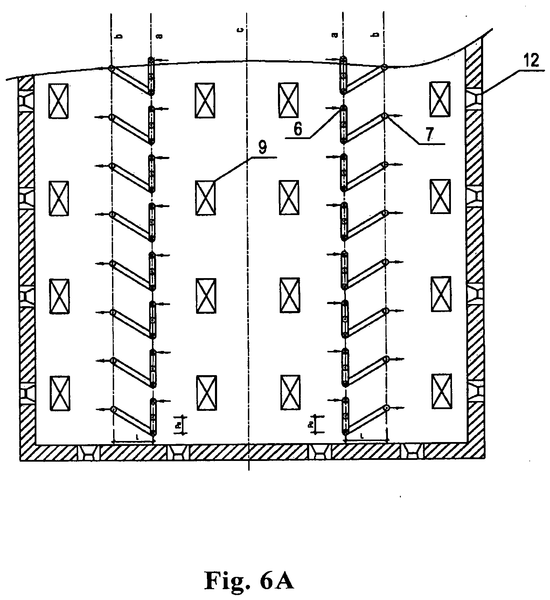

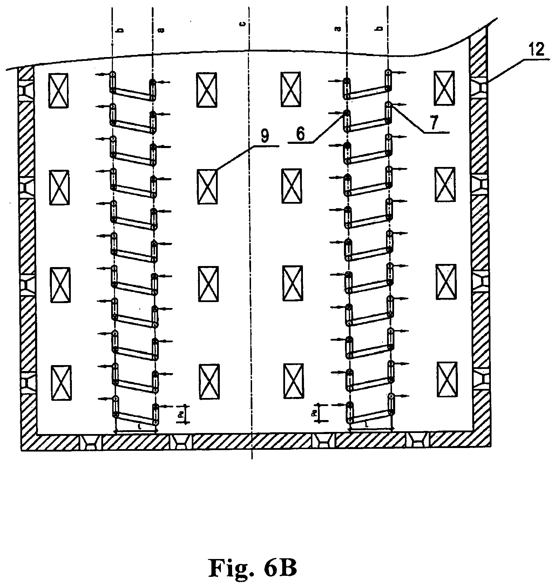

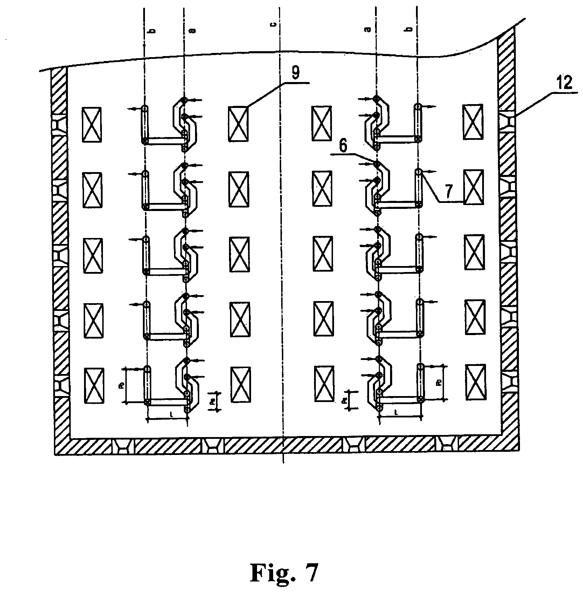

Said radiant coils are two-passed or have more than two passes; said radiant coils at least include one inlet tube (6) and one outlet tube (7), said inlet tube and said outlet tube are straight tubes arranged vertically; when the coils are two-passed, said inlet tube and said outlet tube are connected by means of a bend tube, and there is no other tube arranged vertically between said inlet tube and said outlet tube; when the coils are multi-passed (for instance, as shown in Figs. 6A, 6B or Fig. 7), there are other straight tubes arranged vertically between said inlet tube and said outlet tube, and these tubes arranged vertically are connected by means of bend tubes and other connection elements to constitute a radiant coil.

In some embodiments of the present invention, said radiation section (1)'s firebox (3) inner clear height H is 8∼15 m.

The amount of heat supply of burners adjacent the side of said furnace tube plane (a) in which inlet pass tube are located is larger than the amount of heat supply of burners adjacent the side of said furnace tube plane (b) in which outlet pass tube are located. In this way, as compared with the uniform heat supply manner of a firebox having the same amount of total heat supply, outlet pass tube's heat flux and TMT can be decreased, such that run-length of the cracking furnace can be prolonged. Meanwhile, the outlet pass tube TMT's circumferential unevenness can be improved, which facilitates improving furnace tubes' thermal stress status and prolonging radiant tubes' service life.

Advantages of the present invention lie in the following aspects:
(1) Furnace tubes within the firebox are arranged in four (4) rows. As compared with other cracking furnaces having the same firebox volume, the present ethylene cracking furnace has larger production capacity, longer run-length and lower energy consumption for each unit of product;
(2) The cracking furnace having radiant coils in the firebox arranged in four (4) rows, as compared with other cracking furnaces having the same production capacity, takes up less space and needs less investment;
(3) The radiant coils in the distinct arrangement manner make all the outlet pass tube TMT (control criteria of the run-length) of the radiant coils be able to be measured directly, which ensures safe operation of the cracking furnace;
(4) A zone control can be adopted for heat supply of the burners. Heat supply load for the inlet tube row is increased, and heat supply load for the outlet tube row is decreased relatively. As compared with uniform heat supply, residence time of reaction achieving the same cracking severity is reduced. Thus, selectivity of reaction can be improved, and a larger target product yield can be obtained. Heat flux and metal wall temperature of the outlet tubes can be decreased. Coking within the radiant tubes is decreased, such that the run-length can be prolonged effectively. As compared with the double row radiant coils supplying heat uniformly, the circumferential temperature distribution of the outlet tubes is more uniform. Thus, the outlet tubes' thermal stress status is improved to prolong the service life of the radiant coils. Due to the heat supply load of the inlet furnace tubes being improved, the inlet radiant tubes' metal wall temperature is increased (generally, the inlet radiant tubes' metal wall temperature is lower than the outlet radiant tubes' metal wall temperature, expansion of the inlet tube and expansion of the outlet tube are different, leading to temperature difference stress). The inlet and outlet tubes' metal wall temperature difference is decreased, and the temperature difference stress is released, which also facilitates prolonging of the service life of the radiant coils;
(5) With respect to different feedstock cases, the length of the radiant coils can be optimized by changing the height of the firebox in the design, so as to optimize residence time of the process flow in the radiant coils to obtain optimized selectivity and run-length, such that the running of the cracking furnace can obtain maximum benefits finally.

In a word, the ethylene cracking furnace provided in the present invention can realize the large capacity cracking furnace. As compared with other cracking furnaces having the same firebox volume, the present ethylene cracking furnace has larger production capacity, having a longer run-length, having lower energy consumption for each unit of product. The cracking furnace having the radiant coils arranged in four (4) rows in the firebox, as compared with other cracking furnaces having the same production capacity, takes up less space and needs less investment. The radiant coils in the distinct arrangement manner make all the outlet pass tube's tube metal temperature (TMT, Tube Metal Temperature, it is a control criteria of the run-length) be able to be measured directly, which ensures safe operation of the cracking furnace. A zone control can be adopted for the heat supply of the burners, the residence time of cracking reaction can be reduced, the selectivity of the reaction can be improved, the heat flux of the outlet tubes can be decreased, the run-length can be prolonged effectively, the thermal stress status of the outlet radiant tubes can be improved, and the service life of the furnace coils can be prolonged.

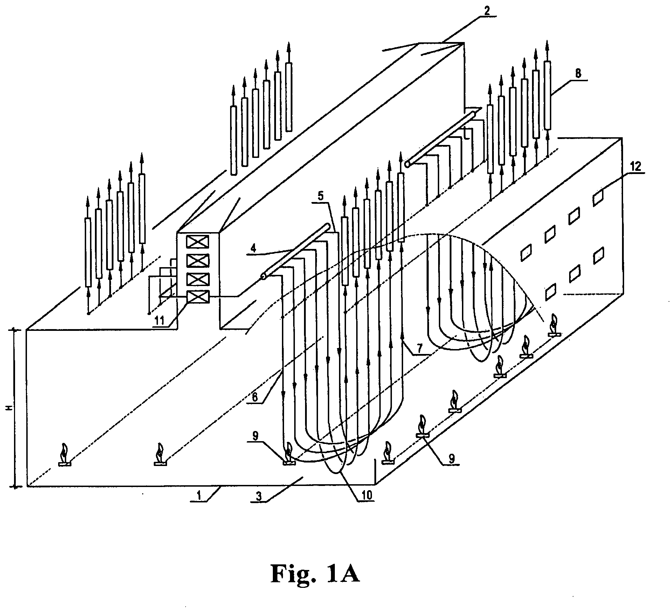

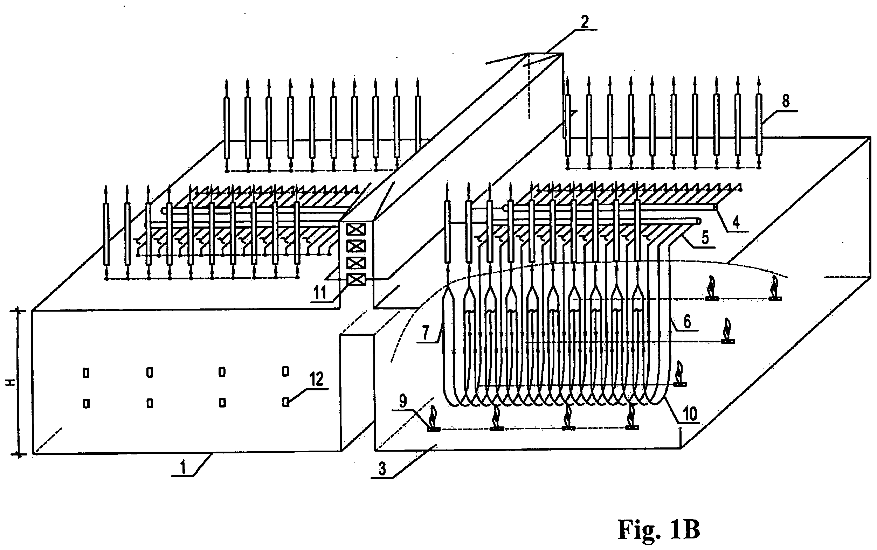

As shown in Fig. 1A and Fig. 1B, the ethylene cracking furnace comprises a radiant section (1) and a convection section (2), and further comprises other indispensable elements of a traditional ethylene cracking furnace. Its radiant section (1) is provided with at least one firebox (3), and the firebox (3) is further provided with bottom burners (9), radiant coils constituted by inlet tubes (6), outlet tubes (7) and other intermediate radiant tubes (10). Several radiant tubes are connected by bend tubes and other pipe fittings to constitute a group of coil. Adjacent groups of coils are arranged in two rows between two rows of bottom burners (9) within the firebox. The radiant coil inlets are connected with distribution tubes (5) and manifolds (4), and the outlets are connected with the TLEs (8).

The inventive processing procedures of the present invention are as follows: A cracking feedstock enters the convection section (2) firstly. The feedstock is preheated by means of convection coil (11), in which dilution steam can be used to mix with the feedstock to decrease hydrocarbon partial pressure. After the feedstock is preheated to a certain temperature (550°C∼700°C), by means of a high temperature crossover pipe, the raw material is conveyed to the manifold (4), and then by means of flow distribution tube (5) enters the radiation furnace coils for thermal cracking reaction. The cracking reaction product's cracked gas enters the TLEs (8) to have its temperature be decreased rapidly, so as to stop from secondary reaction of the cracked gas. The cracked gas with lowered temperature, which, via a quench fitting, has its temperature further lowered, enters downstream processing equipment.

### First Example

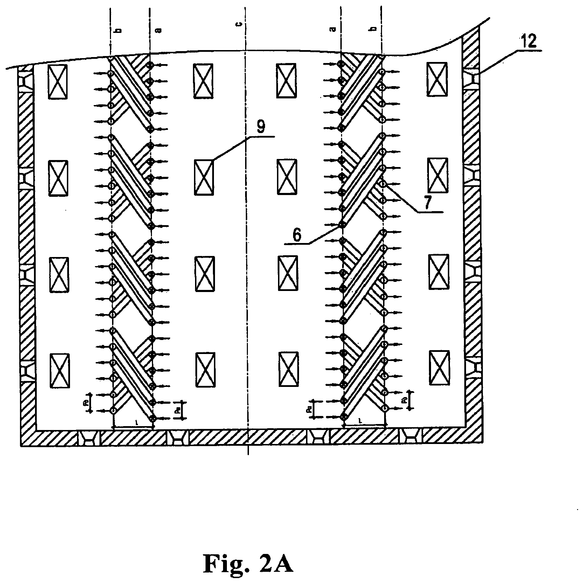

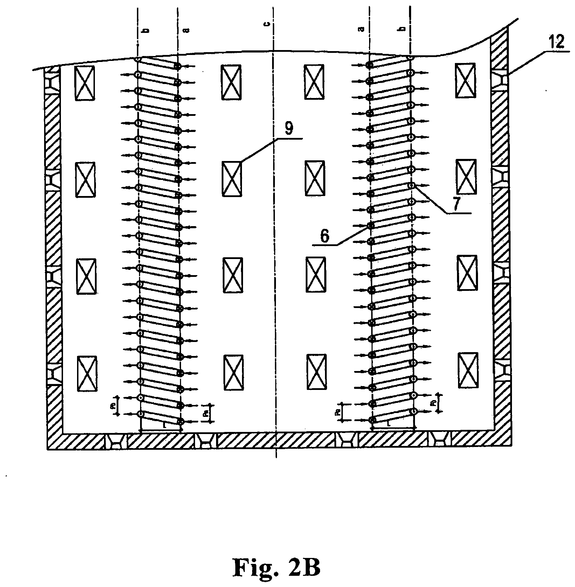

As shown in Fig. 2A, the firebox is provided with 96 groups of 1-1 type radiant coils (U-shaped coils), wherein 48 groups are arranged between each two rows of bottom burners, and the firebox is provided with four rows of radiant tubes in total. The inlet tube has an inner diameter Din = 54 mm, and the inlet tubes are arranged on the tube row plane (a) next to the firebox central line. The outlet tube has an inner diameter Dout = 62 mm, and the outlet tubes are arranged on the tube row plane (b) next to the firebox side wall. The distance between the tube row plane (a) and the tube row plane (b) is L = 500 mm. Tube center distance between adjacent radiant tubes on each tube row plane is Pa, b = 196 mm. After the outlet tubes extend out of the firebox, each two of them are combined to enter a linear TLE (TLE-Transfer Line Exchanger). This firebox has a clear length of 11 m, a clear width of 6.5 m, and a clear height H which is 13.5 mm. The feedstock is NAP (Naphtha). The dilute steam ratio is 0.5 (WT/WT-weight/Weight). The total flow of material within each group of coil is 795kg/h. The whole furnace comprises 32 bottom burners arranged in four (4) rows. In practical production operation, the heat supply load of the burners adjacent the firebox central line is 1.2 times of the heat supply load of the burners adjacent the firebox side wall. This cracking furnace has an ethylene production capacity of 120 KTA (Kilo Ton Annually), and the run-length is 80 days.

### Second Example

As shown in Fig. 7, the firebox is provided with 32 groups of 2-2-1-1 type radiant coils (four passes splitting variable-diameter coil), wherein 16 groups arranged in two rows are between each two rows of bottom burners, and the firebox is provided with four rows of radiant tubes in total. The two parallel inlet tubes in the first pass respectively have an inner diameter Din = 54 mm, and the two parallel inlet tubes in the second pass respectively have an inner diameter D2 = 54 mm. The total four radiant tubes in the first and second passes are arranged on the tube row plane (a) next to the firebox central line. The tube center distance between adjacent radiant tubes is Pa = 160 mm. One radiant tube in the third pass has an inner diameter D3 = 84 mm. The outlet tube in the fourth pass has an inner diameter Dout = 84 mm. The total two radiant tubes in the third and fourth passes are arranged on the tube row plane (b) next to the firebox side wall. The tube center distance between adjacent radiant tubes is Pb = 320 mm. The distance between the tube row plane (a) and the tube row plane (b) is L = 600 mm. After the outlet tubes extend out of the firebox, they enter a linear TLE (TLE-Transfer Line Exchanger). This firebox has a clear length of 12 m, a clear width of 6.5 m, and a clear height H which is 13 mm. The feedstock is ethane. The dilute steam ratio is 0.3 (WT/WT-weight/Weight). The total flow rate of material within each group of radiant coil is 1300 kg/h. The whole furnace comprises 32 bottom burners arranged in four (4) rows. In practical production operation, the heat supply load of the burners next to the firebox central line is 1.3 times of the heat supply load of the burners next to the firebox side wall. This cracking furnace has an ethylene production capacity of 130 KTA (Kilo Ton Annually), and the run-length is 100 days. If the double firebox arrangement as shown in Fig. 1B is adopted, the whole furnace comprises 64 groups of 2-2-1-1 type radiant coils, and the ethylene production capacity of a single furnace can achieve 260KTA.

## Claims

1. Procedure for operating an ethylene cracking furnace mainly comprising a radiant section (1), a convection section (2), and TLEs (Transfer Line Exchangers) (8), whereby,
said radiation section (1) is provided with at least one firebox (3) with its bottom provided with a plurality of burners (9), said plurality of burners (9) comprises a first, a second, a third and a fourth rows of burners arranged in sequence and parallel with each other,
said firebox (3) is provided with a first group of radiant coils and a second group of radiant coils, said first group of radiant coils is arranged between said first row of burners and said second row of burners, and said second group of radiant coils is arranged between said third row of burners and said fourth row of burners; and
both said first group of radiant coils and said second group of radiant coils are arranged in two rows, such that said firebox (3) is provided with four rows of radiant tubes in total;
two furnace tube planes (a, a) in which said first group of radiant coils and said second group of radiant coils' inlet pass tube are located keep far away from said firebox (3)'s side wall and adjoin said firebox's (3) central line (c);
two furnace tube planes (b, b) in which said first group of radiant coils and said second group of radiant coils' outlet pass tube are located keep far away from said firebox (3)'s central line (c) and adjoin said firebox's (3) side wall; the four furnace tube planes being parallel to each other;
said firebox's (3) side wall is provided with a plurality of peep doors (12), such that the temperature of the metal wall of all the outlet pass tubes can be measured directly through said peep doors (12);
wherein said radiant coils are two-pass radiant coils or multi-pass radiant coils having more than two passes;
said radiant coils comprise at least one inlet tube (6) and one outlet tube (7), both said inlet tube and said outlet tube are straight tubes arranged vertically;
when the radiant coils are two-pass radiant coils, said inlet tube and said outlet tube are connected by a bend tube, and there is no other radiant tube arranged vertically between said inlet tube and said outlet tube;
when the radiant coils are multi-pass radiant coils, there are other straight radiant tubes arranged vertically between said inlet tube and said outlet tube, these radiant tubes arranged vertically are connected by bend tubes to constitute a group of radiant coil, wherein the amount of heat supply of burners on the side of said furnace tube plane (a) adjoining inlet pass tubes is larger than the amount of heat supply of burners on the side of said furnace tube plate (b) adjoining outlet pass tubes,
whereby when operating the ethylene cracking furnace, a cracking feedstock enters the convection section (2) firstly and is preheated by means of convection coil (11), after being preheated to 550°C - 700°C by means of a high temperature crossover pipe, the feedstock is conveyed to a manifold (4), and then enters by means of a flow distribution tube (5) the radiation furnace coils for thermal cracking reaction, whereby the product of the cracking reaction is cracked gas, which enters the TLEs (8) to have its temperature be decreased rapidly, so as to stop from secondary reaction of the cracked gas, whereby the cracked gas with lowered temperature, which, via a quench fitting, has its temperature further lowered, enters downstream processing equipment.

## Patentansprüche

1. Verfahren zum Betreiben eines Ethylen-Spaltofens, der im Wesentlichen einen Strahlungsabschnitt (1), einen Konvektionsabschnitt (2) und TLEs (Transferleitungstauscher) (8) umfasst, wobei
der Strahlungsabschnitt (1) mit wenigstens einer Brennkammer (3) versehen ist, deren Boden mit mehreren Brennern (9) versehen ist, wobei die mehreren Brenner (9) eine erste, eine zweite, eine dritte und eine vierte Reihe von Brennern umfassen, die der Reihe nach und parallel zueinander angeordnet sind,
wobei die Brennkammer (3) mit einer ersten Gruppe von Rohrschlangen und einer zweiten Gruppe von Rohrschlangen versehen ist, wobei die erste Gruppe von Rohrschlangen zwischen der ersten Reihe von Brennern und der zweiten Reihe von Brennern angeordnet ist, und wobei die zweite Gruppe von Rohrschlangen zwischen der dritten Reihe von Brennern und der vierten Reihe von Brennern angeordnet ist; und
die erste Gruppe von Rohrschlangen und die zweite Gruppe von Rohrschlangen in zwei Reihen angeordnet sind, so dass die Brennkammer (3) insgesamt mit vier Reihen von Strahlungsrohren versehen ist;
zwei Ofenrohrebenen (a, a), in denen die Einlassdurchgangsrohre der ersten Gruppe von Rohrschlangen und der zweiten Gruppe von Rohrschlangen angeordnet sind, weit entfernt von der Seitenwand der Brennkammer (3) liegen und an die Mittellinie (c) der Brennkammer (3) angrenzen;
zwei Ofenrohrebenen (b, b), in denen die Auslassdurchgangsrohre der ersten Gruppe von Rohrschlangen und der zweiten Gruppe von Rohrschlangen angeordnet sind, weit entfernt von der Mittellinie (c) der Brennkammer (3) liegen und an die Seitenwand der Brennkammer (3) angrenzen; wobei die vier Ofenrohrebenen parallel zueinander liegen;
wobei die Seitenwand der Brennkammer (3) mit mehreren Gucklochtüren (12) versehen ist, so dass die Temperatur der Metallwand aller Auslassdurchgangsrohre direkt durch die Gucklochtüren (12) gemessen werden kann;
wobei die Rohrschlangen Rohrschlangen mit zwei Passagen oder Rohrschlangen mit mehreren Passagen sind, die mehr als zwei Passagen aufweisen;
wobei die Rohrschlangen wenigstens ein Einlassrohr (6) und ein Auslassrohr (7) umfassen, wobei das Einlassrohr und das Auslassrohr gerade Rohre sind, die vertikal angeordnet sind;
wobei dann, wenn die Rohrschlangen Rohrschlangen mit zwei Passagen sind, das Einlassrohr und das Auslassrohr durch ein gebogenes Rohr verbunden sind, und es kein weiteres Strahlungsrohr gibt, das zwischen dem Einlassrohr und dem Auslassrohr vertikal angeordnet ist;
wobei es dann, wenn die Rohrschlangen Rohrschlangen mit mehreren Passagen sind, weitere gerade Strahlungsrohre gibt, die zwischen dem Einlassrohr und dem Auslassrohr vertikal angeordnet sind, wobei diese Strahlungsrohre, die vertikal angeordnet sind, durch gebogene Rohre verbunden sind, um eine Gruppe von Rohrschlangen zu bilden,
wobei der Betrag an zugeführter Wärme von Brennern auf der Seite der Ofenrohrebene (a), die an Einlassdurchgangsrohre grenzt, größer als der Betrag der zugeführten Wärme von Brennern auf der Seite der Ofenrohrebene (b) ist, die an Auslassdurchgangsrohre grenzt,
wobei beim Betreiben des Ethylen-Spaltofens ein Rohmaterial zum Spalten zuerst in den Konvektionsabschnitt (2) eintritt und mittels einer Konvektionsschlange (11) vorgeheizt wird, nachdem es mittels eines Hochtemperatur-Überführungsrohrs auf 550 °C-700 °C vorgeheizt wurde, wobei das Rohmaterial zu einem Verteiler (4) transportiert wird und dann mittels eines Strömungsverteilungsrohrs (5) für die thermische Spaltreaktion in die Strahlungsofenspiralen eintritt, wobei das Produkt der Spaltreaktion gespaltenes Gas ist, das so in die TLEs (8) eintritt, dass seine Temperatur rasch sinkt, um so eine Sekundärreaktion des gespaltenen Gases zu stoppen, wodurch das gespaltene Gas mit abgesenkter Temperatur, dessen Temperatur durch Abschrecken weiter abgesenkt wird, in die stromabwärts gelegene Verarbeitungsanlage eintritt.

## Revendications

1. Procédure pour le fonctionnement d'un four de craquage d'éthylène comprenant principalement une section de rayonnement (1), une section de convection (2) et des échangeurs à lignes de transfert ("Transfer Line Exchangers" ou TLE) (8), dans laquelle
ladite section de rayonnement (1) est dotée d'au moins une chambre de combustion (3) dont le fond est doté d'une pluralité de brûleurs (9), ladite pluralité de brûleurs (9) comprenant une première rangée, une seconde rangée, une troisième rangée et une quatrième rangée de brûleurs agencées en séquence et parallèlement les unes aux autres,
ladite chambre de combustion (3) est dotée d'un premier groupe de bobines de rayonnement et d'un second groupe de bobines de rayonnement, ledit premier groupe de bobines de rayonnement est agencé entre ladite première rangée de brûleurs et ladite seconde rangée de brûleurs, et ledit second groupe de bobines de rayonnement est agencé entre ladite troisième rangée de brûleurs et ladite quatrième rangée de brûleurs ; et
ledit premier groupe de bobines de rayonnement et ledit second groupe de bobines de rayonnement sont agencés tous les deux en rangées, de telle façon que ladite chambre de combustion (3) est dotée de quatre rangées de tubes de rayonnement au total ;
deux plans de tubes de four (a, a) dans lesquels le tube de passage d'entrée dudit premier groupe de bobines de rayonnement et le tube de passage d'entrée dudit second groupe de bobines de rayonnement sont situés restent très éloignés de la paroi latérale de ladite chambre de combustion (3) et sont jointifs à la ligne centrale (c) de ladite chambre de combustion (3) ;
deux plans de tubes de four (b, b) dans lesquels le tube de passage de sortie dudit premier groupe de bobines de rayonnement et le tube de passage de sortie dudit second groupe de bobines de rayonnement sont situés restent très éloignés de la ligne centrale (c) de ladite chambre de combustion et sont jointifs à la paroi latérale de ladite chambre de combustion (3), les quatre plans de tubes de four étant parallèles les uns aux autres ;
la paroi latérale de ladite chambre de combustion (3) est dotée d'une pluralité de portes d'observation (12), de telle façon que la température de la paroi métallique de tous les tubes de passage de sortie peut être mesurée directement à travers lesdites portes d'observation (12) ;
dans laquelle lesdites bobines de rayonnement sont des bobines de rayonnement à deux passes ou des bobines rayonnement à passes multiples ayant plus de deux passes ;
lesdites bobines de rayonnement comprennent au moins un tube d'entrée (6) et un tube de sortie (7), ledit tube d'entrée et ledit tube de sortie étant tous les deux des tubes rectilignes agencés verticalement ;
quand les bobines de rayonnement sont des bobines de rayonnement à deux passes, ledit tube d'entrée et ledit tube de sortie sont connectés par un tube cintré, et il n'y a pas d'autre tube de rayonnement agencé verticalement entre ledit tube d'entrée et ledit tube de sortie ;
quand les bobines de rayonnement sont des bobines de rayonnement à passes multiples, il existe d'autres tubes de rayonnement rectilignes agencés verticalement entre ledit tube d'entrée et ledit tube de sortie, ces tubes de rayonnement agencés verticalement étant connectés par des tubes cintrés pour constituer un groupe de bobines de rayonnement,
dans lequel la quantité de chaleur alimentée par les brûleurs sur le côté dudit plan de tubes de four (a) adjoint au tube de passage d'entrée est plus grande que la quantité de chaleur alimentée par les brûleurs sur le côté dudit plan de tubes de four (b) adjoint au tube de passage de sortie,
grâce à quoi, lors du fonctionnement du four de craquage d'éthylène, le produit de départ à craquer entre en premier lieu dans la section de convection (2) et est préchauffé au moyen de la bobine de convection (11) ; après avoir été préchauffé à 550° C à 700° C au moyen d'un tube transversal à haute température, le produit de départ est convoyé à un collecteur (4) et entre ensuite au moyen d'un tube de distribution d'écoulement (5) dans les bobines de four de rayonnement pour une réaction de craquage thermique, grâce à quoi le produit de la réaction de craquage est un gaz craqué, qui entre dans l'échangeur TLE (8) de sorte que sa température est rapidement diminuée, de manière à arrêter une réaction secondaire du gaz craqué, grâce à quoi le gaz craqué dont la température est abaissée et dont la température est encore abaissée au moyen d'un raccord étanche, entre dans l'équipement de traitement en aval.
